# EUROPÄISCHE PATENTSCHRIFT

(11) **EP 3 386 838 B1**
(45) Veröffentlichungstag und Bekanntmachung des Hinweises auf die Patenterteilung: **17.06.2020**
(21) Anmeldenummer: 16801483.5
(22) Anmeldetag: 25.11.2016
(51) Int. Cl.: B62D 5/093, B62D 5/09

(54) **HYDRAULISCHE LENKEINRICHTUNG**
HYDRAULIC STEERING DEVICE
MÉCANISME DE DIRECTION HYDRAULIQUE

(30) Priorität: 08.12.2015 DE 102015121328
(43) Veröffentlichungstag der Anmeldung: 17.10.2018
(73) Patentinhaber: Danfoss Power Solutions ApS, 6430 Nordborg (DK)
(72) Erfinder: BERGMANN, Erhard, 19079 Banzkow / OT Mirow (DE); KÄCKENMEISTER, Toralf, 19374 Raduhn (DE); DE LA MOTTE, Markus, 19300 Muchow (DE); JANETZKI, Steffen, 19412 Brüel (DE)
(74) Vertreter: Gulde & Partner
(86) Internationale Anmeldenummer: PCT/EP2016/078843
(87) Internationale Veröffentlichungsnummer: WO 2017/097610

(56) Entgegenhaltungen:
- DE-A1-102011 112 625

## Beschreibung

Die Erfindung betrifft eine hydraulische Lenkeinrichtung.

Hydraulische Lenkeinrichtungen, beispielsweise im Fahrzeugbereich, sind dem Fachmann grundlegend bekannt. Eine solche hydraulische Lenkeinrichtung wird beispielsweise in der DE 10 2011 112 625 A1 beschrieben. Diese ist gattungsbildend für den Gegenstand der vorliegenden Erfindung, offenbart den Oberbegriff des Anspruchs 1.

Es ist Aufgabe der vorliegenden Erfindung eine gattungsgemäße hydraulische Lenkeinrichtung anzugeben, die mit geringem Aufwand realisierbar ist und die ein hohes Maß an funktionaler Sicherheit gewährleistet.

Die Aufgabe wird durch den Gegenstand des unabhängigen Patentanspruchs 1 gelöst.

Gegenstand der vorliegenden Erfindung ist eine hydraulische Lenkeinrichtung, die einen Lenkzylinder mit einer Versorgungsanlage hydraulisch verbindet, wobei die Versorgungsanlage mit dem Lenkzylinder über ein Lenkventil zur Ausbildung einer Hauptstromverbindung hydraulisch wirkverbindbar ist und die Versorgungsanlage mit dem Lenkzylinder über eine Stromregelventilanordnung zur Ausbildung einer, die Hauptstromverbindung umgehenden Nebenstromverbindung hydraulisch wirkverbindbar ist, wobei die Stromregelventilanordnung durch ein elektrisches Steuergerät ansteuerbar ist und die Stromregelventilanordnung einzeln ansteuerbare Ventilgruppen umfasst, die jeweils in den Vorlauf und Rücklauf der Nebenstromverbindung geschaltet sind. Erfindungsgemäß ist vorgesehen, dass die Stromregelventilanordnung wenigstens ein Ventil umfasst, das ausgebildet ist, unabhängig von einer an dem Ventil anliegenden Druckdifferenz einen definierten oder definierbaren Volumenstrom zu erzeugen.

Dies bietet den Vorteil, dass die funktionale Qualität der Lenkeinrichtung erhöht wird. So sind beispielsweise in Fehlerfällen, in denen einzelne Ventile nicht ordnungsgemäß funktionieren oder angesteuert werden, die Auswirkungen mittels des druckunabhängigen konstanten definierbaren Volumenstroms vorteilhaft kompensierbar. Die vorliegende Erfindung funktioniert also nach dem dem Fachmann wohl bekannten Fail-Safe-Prinzip. Ein weiterer Vorteil besteht darin, dass die Bedienbarkeit der Lenkeinrichtung verbessert wird. So kann vorteilhaft unabhängig von an Rädern eines Fahrzeugs und im Bereich eines Lenkzylinders auftretenden Lenkkräften, rein beispielhaft hervorgerufen durch Bodenunebenheiten oder auf dem Boden liegende Gegenstände, ein gleichmäßiges Lenkverhalten gewährleistet werden. Infolge der durch die Ventile selbstständigen Regelung des vorgegebenen Volumenstroms wird dem Lenkzylinder eine Verfahrgeschwindigkeit eingeprägt, unabhängig von den auftretenden Lenkkräften beziehungsweise unabhängig von einer an den Ventilen anliegenden Druckdifferenz.

In bevorzugter Ausgestaltung der vorliegenden Erfindung ist vorgesehen, dass das wenigstens eine Ventil weiterhin ausgebildet ist, unabhängig von einer Temperatur des Ventils und/oder einer Temperatur eines das Ventil durchströmenden Fluides einen definierten oder definierbaren Volumenstrom zu erzeugen.

Dies bietet den Vorteil, dass die funktionale Qualität und die Bedienbarkeit der Lenkeinrichtung erhöht werden. Mit Vorteil sind beispielsweise unerwünschte Veränderungen im Volumenstrom infolge einer Erwärmung durch Betriebswärme oder andere Wärmequellen kompensierbar.

In weiterer bevorzugter Ausgestaltung der vorliegenden Erfindung ist vorgesehen, dass das wenigstens eine Ventil ein Zwei-Wege-Stromregelventil ist.

Dies bietet den Vorteil, dass eine dem Fachmann gut bekannte Bauart von Ventilen mit den geforderten Eigenschaften vorliegt, die sicher und mit geringem Aufwand einsetzbar ist.

In weiterer bevorzugter Ausgestaltung der vorliegenden Erfindung ist vorgesehen, dass die Stromregelventilanordnung vier Ventile umfasst, von denen ein Ventil in eine Vorlauf-Rechtslenkung, ein Ventil in eine Rücklauf-Linkslenkung, ein Ventil in eine Vorlauf-Linkslenkung und ein Ventil in eine Rücklauf-Rechtslenkung geschaltet ist.

Dies bietet den Vorteil, dass jedes der Ventile einzeln ansteuerbar ist. Unter Durchführung eines Abgleichs mit der Bewegung des Lenkzylinders kann bei Bedarf steuernd auf jedes Ventil separat eingewirkt werden.

In weiterer bevorzugter Ausgestaltung der vorliegenden Erfindung ist vorgesehen, dass den Ventilen ein gemeinsames Freigabe-Abschaltventil vorgeschaltet ist.

Dies bietet den Vorteil, dass die Nebenstromverbindung durch Ansteuerung des gemeinsamen Freigabe-Abschaltventils aktiv oder passiv geschaltet werden kann.

In weiterer bevorzugter Ausgestaltung der vorliegenden Erfindung ist vorgesehen, dass
die Stromregelventilanordnung auch als Sologerät, als reine "Steer-By-Wire-Lenkung" betreibbar ist.

Dies bietet den Vorteil, dass die Bedienung der Lenkeinrichtung komfortabler und auch automatisierbar und fernsteuerbar wird. In Verbindung mit den Ventilen, die unabhängig von einer anliegenden Druckdifferenz einen definierten Volumenstrom realisieren können, lässt sich eine Lenkungsfunktion mit hoher Präzision und Gleichmäßigkeit verwirklichen.

In weiterer bevorzugter Ausgestaltung der vorliegenden Erfindung ist vorgesehen, dass das Freigabe-Abschaltventil ausgebildet ist, im Fehlerfall die Stromregelventilanordnung abzuschalten.

Die Sicherheit der Lenkeinrichtung wird dadurch vorteilhaft erhöht.

In weiterer bevorzugter Ausgestaltung der vorliegenden Erfindung ist vorgesehen, dass das Steuergerät zur Plausibilitätsprüfung der Ansteuersignale für die Ventile mit Messwertaufnehmern verbunden ist, die ausgebildet sind, eine Ist-Stellung des Lenkzylinders zu erfassen.

Somit ist vorteilhafterweise ein Korrektursignal bei einer fehlerhaften Bewegung des Lenkzylinders erzeugbar.

Weitere bevorzugte Ausgestaltungen der Erfindung ergeben sich aus den übrigen, in den Unteransprüchen genannten Merkmalen.

Die Erfindung wird nachfolgend anhand eines Ausführungsbeispiels und dazugehöriger Zeichnungen näher erläutert. Die Figuren zeigen:
- Figur 1: eine prinziphafte Darstellung einer hydraulischen Lenkeinrichtung nach dem Stand der Technik und
- Figur 2: eine prinziphafte Darstellung einer erfindungsgemäßen hydraulischen Lenkeinrichtung in einer bevorzugten Ausführungsform.

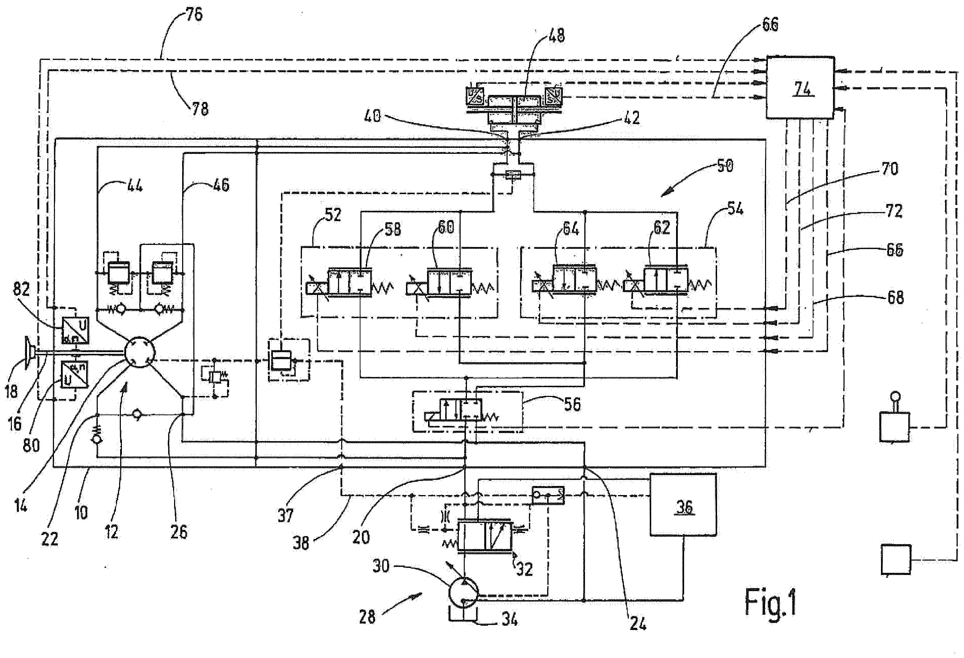

Figur 1 zeigt eine prinziphafte Darstellung einer hydraulischen Lenkeinrichtung nach dem Stand der Technik aus der DE 10 2011 112 625 A1, so dass an dieser Stelle keine abschließende Beschreibung gegeben ist. Die hydraulische Lenkeinrichtung 10 umfasst ein Lenkventil 12 mit einer drehschiebergesteuerten Dosierpumpe 14, die über ein Lenkgestänge 16 mit einem Handlenkrad 18 verbunden ist. Die Lenkeinrichtung 10 besitzt einen Zulaufanschluss 20, der mit einem ersten Eingang 22 des Lenkventils 12 verbunden ist. Die Lenkeinrichtung 10 weist ferner einen Rücklaufanschluss 24 auf, der mit einem Ablauf 26 des Lenkventiles 12 verbunden ist. An den Zulaufanschluss 20 beziehungsweise Rücklaufanschluss 24 ist eine insgesamt mit 28 bezeichnete Versorgungsanlage angeschlossen. Die Versorgungsanlage 28 umfasst eine Versorgungspumpe 30, die über ein Stromteilventil 32 mit dem Zulaufanschluss 20 verbunden ist. Ferner ist ein Tank 34 vorgesehen, der mit dem Rücklaufanschluss 24 verbunden ist. Das Stromteilventil 32 bildet ein Prioritätsventil, mittels dem ein Versorgungsbetrieb der Versorgungspumpe 30 zwischen einer Arbeitshydraulik 36 und der Lenkeinrichtung 10 gesteuert werden kann. Über einen Lastanschluss 37 und eine Steuerleitung 38 erhält das Stromteilventil 32 bei Anforderung durch die hydraulische Lenkeinrichtung 10 ein Signal, das der hydraulischen Lenkeinrichtung 10 Priorität vor der Arbeitshydraulik 36 zuordnet. Die Lenkeinrichtung 10 weist ferner Zylinderanschlüsse 40 und 42 auf. Der Zylinderanschluss 40 ist über eine Leitung 44 und der Zylinderanschluss 42 über eine Leitung 46 mit dem Lenkventil 12 verbunden. An die Zylinderanschlüsse 40 und 42 ist ein Lenkzylinder 48 angeschlossen, der in nicht dargestellter Weise mit lenkbaren Rädern eines Fahrzeuges verbunden ist. Der Anschluss 40 ist mit einer für die Lenkrichtung links und der Anschluss 42 mit einer für die Lenkrichtung rechts zuständigen Kammer des Lenkzylinders 48 verbunden. Somit bildet sich von der Versorgungspumpe 30 über das Stromteilventil 32 das Lenkventil 12 zum Lenkzylinder 48 und vom Lenkzylinder 48 zurück über das Lenkventil 12 und den Tank 34 eine Hauptstromverbindung aus. Die Lenkeinrichtung 10 umfasst ferner eine Stromregelventilanordnung 50.

Die Stromregelventilanordnung 50 besitzt eine erste Ventilgruppe 52 und eine zweite Ventilgruppe 54 sowie ein Freigabe-Abschaltventil 56. Die Ventilgruppe 52 umfasst ein als Zulaufventil ausgebildetes Ventil 58 und ein als Rücklaufventil ausgebildetes Ventil 60. Die Ventilgruppe 54 umfasst ein als Zulaufventil ausgebildetes Ventil 62 und ein als Rücklaufventil ausgebildetes Ventil 64. Die Ventile 58, 60, 62 und 64 sind jeweils als dem Fachmann bekannte Proportionalventile ausgebildet. Bei solchen Proportionalventilen wird bei unbetätigtem Magneten ein Steuerkolben durch eine Druckfeder in einer Ausgangsstellung gehalten und sperrt den Volumenstrom. Durch die Erregung des Magneten wird der Steuerkolben direkt - proportional dem elektrischen Eingangssignal - verstellt. Die Ventile 58 und 60 sind mit dem Zylinderanschluss 40 und die Ventile 62 und 64 mit dem Zylinderanschluss 42 verbunden. Die Ventile 58 und 62 sind über das Freigabe-Abschaltventil 56 mit dem Zulaufanschluss 20 und die Ventile 60 und 64 über das Freigabe-Abschaltventil 56 mit dem Rücklaufanschluss 24 verbunden beziehungsweise verbindbar. Somit bildet sich von der Versorgungspumpe 30 über die Stromregelventilanordnung 50 zum Lenkzylinder 48 und vom Lenkzylinder 48 zurück über die Stromregelventilanordnung 50 und den Tank 34 eine Nebenstromverbindung aus. Der Lenkzylinder 48 ist also über das Lenkventil 12 mit der Versorgungsanlage 28 über eine Hauptstromverbindung und über die Stromregelventilanordnung 50 über eine die Hauptstromverbindung umgehende Nebenstromverbindung hydraulisch wirkverbunden. Zur Ansteuerung sind die als Proportionalventile ausgeführten Ventile 58, 60, 62 und 64 über Steuerleitungen 66, 68, 70 beziehungsweise 72 mit einem Steuergerät 74 verbunden.

Wird nun über das Steuergerät das Freigabe-Abschaltventil 56 von seiner dargestellten Sperrstellung in Durchlassstellung geschaltet, das heißt, der Zulaufanschluss 20 wird mit den Ventilen 58 und 62 und der Rücklaufanschluss 24 mit den Ventilen 60 und 64 verbunden, bewertet das Steuergerät 74 die von den Messwertaufnehmern 82 beziehungsweise 80 gelieferten Signale und stellt entsprechende Ansteuersignale über die Steuerleitungen 66, 68, 70 beziehungsweise 72 für die Ventile 58, 60, 62 beziehungsweise 64 bereit. Je nach dem, ob über das Lenkventil 12, also über das Handlenkrad 18, ein Linkslenkvorgang oder ein Rechtslenkvorgang erfolgt, wird über das Steuergerät 74 entweder das Ventil 58 und das Ventil 64 bei Linkslenkung oder das Ventil 60 und das Ventil 62 bei Rechtslenkung angesteuert. Hierdurch stellt sich ein definierter Öffnungsquerschnitt ein, der einen zum Hauptölstrom proportionalen Nebenölstrom liefert. Der Volumenstrom des Nebenölstroms ist anhängig von der an dem jeweiligen Ventil 58, 60, 62, 64 anliegenden Druckdifferenz.

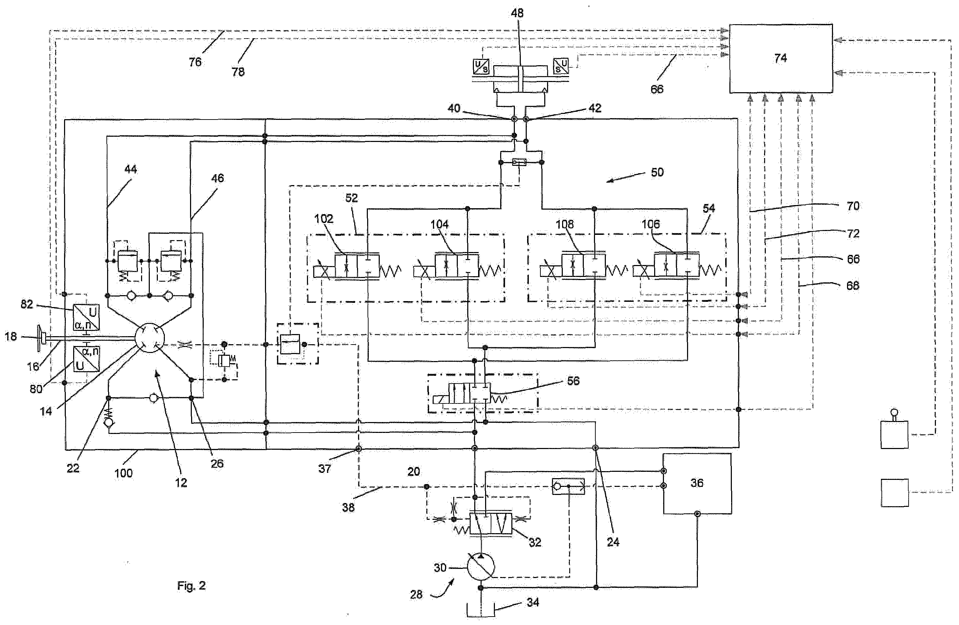

Figur 2 zeigt eine prinziphafte Darstellung einer erfindungsgemäßen hydraulischen Lenkeinrichtung in einer bevorzugten Ausführungsform. Sofern Bezugszeichen verwendet werden, die mit denen der Figur 1 identisch sind, so beschreiben diese gleiche Merkmale. Das in Figur 1 Beschriebene gilt dann zumindest auch ergänzend für Figur 2. Der grundlegende Aufbau der in Figur 2 dargestellten erfindungsgemäßen Lenkeinrichtung 100 ähnelt dem in Figur 1 gezeigten Stand der Technik, so dass in dem vorliegenden Ausführungsbeispiel lediglich auf Merkmale eingegangen wird, welche die vorliegende Erfindung vom Stand der Technik aus Figur 1 abgrenzen. Aus Figur 2 ist ersichtlich, dass die erfindungsgemäße Lenkeinrichtung 100 nicht die in Figur 1 gezeigten und als Proportionalventile ausgebildeten Ventile 58, 60, 62, 64 aufweist. Das in Figur 2 gezeigte Ausführungsbeispiel der vorliegenden Erfindung weist stattdessen als Zwei-Wege-Stromregelventile ausgebildete Ventile 102, 104, 106, 108 auf. Diese sind ausgebildet, einen definierbaren Volumenstrom unabhängig von einer an dem jeweiligen Ventil 102, 104, 106, 108 anliegenden Druckdifferenz zu erzeugen. Ebenso sind die Ventile 102, 104, 106, 108 ausgebildet, unabhängig von einer Temperatur des jeweiligen Ventils 102, 104, 106, 108 und unabhängig von einer Temperatur eines das jeweilige Ventil 102, 104, 106, 108 durchströmenden Fluides einen definierbaren Volumenstrom zu erzeugen. Mit der Lenkeinrichtung 100 sind insbesondere Fehlerfälle kompensierbar, sollte eines der Ventile 102, 104, 106, 108 einmal nicht wie vorgesehen funktionieren.

Exemplarisch wird dies am folgenden Szenario verdeutlicht. Für eine Rechtslenkung des Lenkzylinders 48 (Bewegung des Lenkzylinders 48 von rechts nach links) ist es notwendig, dass das als Rücklaufventil ausgebildete Ventil 104 geöffnet ist, so dass ein Ölstrom aus dem Lenkzylinder 48 über den Zylinderanschluss 40 abfließen kann. Das Ventil 102 ist als Zulaufventil ausgebildet und in diesem Fall geschlossen. Analog hierzu muss im Falle einer Linkslenkung des Lenkzylinders 48 (Bewegung des Lenkzylinders 48 von links nach rechts) das Ventil 104 geschlossen sein, so dass sich im Lenkzylinder 48 über den Zylinderanschluss 40 ein entsprechender Druck aufbauen kann, wenn der Ölstrom durch das Ventil 102 in Richtung des Lenkzylinders 48 fließt.

Dem Szenario wird nun fiktiv zugrunde gelegt, es handle sich um ein Fahrzeug mit einer konventionellen hydraulischen Lenkeinrichtung mit Proportionalventilen. Wäre hier eine Linkslenkung beabsichtigt und dabei das Ventil 104 fehlerbedingt noch geöffnet, so könnte ein Fahrer des Fahrzeugs nicht nach links lenken. Der gesamten Ölstrom würde bei einem konventionellen Proportionalventil dann über das fehlerbedingt offene Ventil 104 in Richtung Tank 36 fließen.

Dies lässt sich mit der vorliegenden Erfindung verhindern, da die Ventile 102, 104 im Sinne der Erfindung als Zwei-Wege-Stromregelventile ausgebildet sind. Hier kann durch eine geeignete Ventilsteuerung mit einem entsprechenden Regelalgorithmus, welche der zuständige Fachmann selbstständig implementiert, das Ventil 102 (Zulaufventil) auf einen Volumenstrom-Sollwert eingestellt werden, der über dem Volumenstrom liegt, der infolge des fehlerbedingt vorhandenen Öffnungsgrads des Ventils 104 (Rücklaufventil) durch das Ventil 104 fließt. Somit kann an dem Ventil 104 eine Sättigung des Volumenstroms erzeugt werden. Ein über das Ventil 102 dann noch verfügbarer restlicher Volumenstrom steht der Lenkungsfunktion weiterhin zur Verfügung. Wird dann eine zusätzliche Ölmenge der Versorgungspumpe 30 zur Verfügung gestellt, kann ein Nachweis erbracht werden, dass bei dem Fahrzeug ein den Anforderungen der gültigen Normen und Richtlinien entsprechendes Lenkverhalten sichergestellt ist. Bei einem möglichen Ventilfehler erkennt das System diesen Fehler und kompensiert ihn entsprechend. Das Lenkvermögen der Lenkeinrichtung bleibt erhalten.

Durch die Verwendung von 2-Wege-Stromregelventilen ist es ferner möglich, eine am Lenkzylinder 48 angreifende Kraft definiert abzustützen, da die Volumenstromkennlinie der 2-Wege-Stromregelventile druckunabhängig ist.

### Bezugszeichen

- 10: Lenkeinrichtung
- 12: Lenkventil
- 14: Dosierpumpe
- 16: Lenkgestänge
- 18: Handlenkrad
- 20: Zulaufanschluss
- 22: Eingang
- 24: Rücklaufanschluss
- 26: Ablauf
- 28: Versorgungsanlage
- 30: Versorgungspumpe
- 32: Stromteilventil
- 34: Tank
- 36: Arbeitshydraulik
- 37: Lastanschluss
- 38: Steuerleitung
- 40: Zylinderanschluss
- 42: Zylinderanschluss
- 44: Leitung
- 46: Leitung
- 48: Lenkzylinder
- 50: Stromregelventilanordnung
- 52: Ventilgruppe
- 54: Ventilgruppe
- 56: Freigabe-Abschaltventil
- 58: Ventil
- 60: Ventil
- 62: Ventil
- 64: Ventil
- 66: Steuerleitung
- 68: Steuerleitung
- 70: Steuerleitung
- 72: Steuerleitung
- 74: Steuergerät
- 76: Steuerleitung
- 78: Steuerleitung
- 80: Messwertaufnehmer
- 82: Messwertaufnehmer
- 100: Lenkeinrichtung
- 102: Ventil
- 104: Ventil
- 106: Ventil
- 108: Ventil

## Patentansprüche

1. Hydraulische Lenkeinrichtung, die einen Lenkzylinder (48) mit einer Versorgungsanlage (28) hydraulisch verbindet, wobei die Versorgungsanlage (28) mit dem Lenkzylinder (48) über ein Lenkventil (12) zur Ausbildung einer Hauptstromverbindung hydraulisch wirkverbindbar ist und die Versorgungsanlage (28) mit dem Lenkzylinder (48) über eine Stromregelventilanordnung (50) zur Ausbildung einer, die Hauptstromverbindung umgehenden Nebenstromverbindung hydraulisch wirkverbindbar ist, wobei die Stromregelventilanordnung (50) durch ein elektrisches Steuergerät (74) ansteuerbar ist und die Stromregelventilanordnung (50) einzeln ansteuerbare Ventilgruppen (52, 54) umfasst, die jeweils in den Vorlauf und Rücklauf der Nebenstromverbindung geschaltet sind,
**dadurch gekennzeichnet, dass**
die Stromregelventilanordnung (50) wenigstens ein Ventil (102, 104, 106, 108) umfasst, das ausgebildet ist, unabhängig von einer an dem Ventil (102, 104, 106, 108) anliegenden Druckdifferenz einen definierten oder definierbaren Volumenstrom zu erzeugen.

2. Hydraulische Lenkeinrichtung nach Anspruch 1,
**dadurch gekennzeichnet, dass**
das wenigstens eine Ventil (102, 104, 106, 108) weiterhin ausgebildet ist, unabhängig von einer Temperatur des Ventils (102, 104, 106, 108) und/oder einer Temperatur eines das Ventil (102, 104, 106, 108) durchströmenden Fluides einen definierten oder definierbaren Volumenstrom zu erzeugen.

3. Hydraulische Lenkeinrichtung nach Anspruch 1 oder 2,
**dadurch gekennzeichnet, dass**
das wenigstens eine Ventil (102, 104, 106, 108) ein Zwei-Wege-Stromregelventil ist.

4. Hydraulische Lenkeinrichtung nach einem der Ansprüche 1 bis 3,
**dadurch gekennzeichnet, dass**
die Stromregelventilanordnung (50) vier Ventile (102, 104, 106, 108) umfasst, von denen ein Ventil (106) in einen Vorlauf-Rechtslenkung, ein Ventil (108) in einen Rücklauf-Linkslenkung, ein Ventil (102) in einen Vorlauf-Linkslenkung und ein Ventil (104) in einen Rücklauf-Rechtslenkung geschaltet ist.

5. Hydraulische Lenkeinrichtung nach einem der Ansprüche 1 bis 4,
**dadurch gekennzeichnet, dass**
den Ventilen (102, 104, 106, 108) ein gemeinsames Freigabe-Abschaltventil (56) vorgeschaltet ist.

6. Hydraulische Lenkeinrichtung nach einem der Ansprüche 1 bis 5,
**dadurch gekennzeichnet, dass**
die Stromregelventilanordnung (50) auch als Sologerät, als reine "Steer-By-Wire-Lenkung" betreibbar ist.

7. Hydraulische Lenkeinrichtung nach einem der Ansprüche 1 bis 6,
**dadurch gekennzeichnet, dass**
das Freigabe-Abschaltventil (56) ausgebildet ist, im Fehlerfall die Stromregelventilanordnung (50) abzuschalten.

8. Hydraulische Lenkeinrichtung nach einem der Ansprüche 1 bis 7,
**dadurch gekennzeichnet, dass**
das Steuergerät (74) zur Plausibilitätsprüfung der Ansteuersignale für die Ventile (102, 104, 106, 108) mit Messwertaufnehmern (88, 90) verbunden ist, die ausgebildet sind, eine Ist-Stellung des Lenkzylinders (48) zu erfassen.

## Claims

1. A hydraulic steering apparatus that hydraulically connects a steering cylinder (48) to a supply system (28), the supply system (28) being hydraulically operatively connectible to the steering cylinder (48) via a steering valve (12) so as to form a main flow connection and the supply system (28) being hydraulically operatively connectible to the steering cylinder (48) via a flow control valve arrangement (50) so as to form a secondary flow connection which circumvents the main flow connection, the flow control valve arrangement (50) being controllable by means of an electric control device (74) and the flow control valve arrangement (50) comprising individually controllable valve groups (52, 54) that are connected to the feed line and return line of the secondary flow connection, respectively,
**characterized in that**
the flow control valve arrangement (50) comprises at least one valve (102, 104, 106, 108) that is designed to produce a defined or definable volume flow independently of a pressure difference prevailing at the valve (102, 104, 106, 108).

2. The hydraulic steering apparatus according to Claim 1,
**characterized in that**
the at least one valve (102, 104, 106, 108) is further designed to produce a defined or definable volume flow independently of a temperature of the valve (102, 104, 106, 108) and/or a temperature of a fluid flowing through the valve (102, 104, 106, 108).

3. The hydraulic steering apparatus according to either Claim 1 or Claim 2,
**characterized in that**
the at least one valve (102, 104, 106, 108) is a two-way flow control valve.

4. The hydraulic steering apparatus according to any one of Claims 1 to 3,
**characterized in that**
the flow control valve arrangement (50) comprises four valves (102, 104, 106, 108), of which one valve (106) is connected to a feed right-hand drive, one valve (108) to a return left-hand drive, one valve (102) to a feed left-hand drive and one valve (104) to a return right-hand drive.

5. The hydraulic steering apparatus according to any one of Claims 1 to 4,
**characterized in that**
a common release-shutoff valve (56) is connected upstream of the valves (102, 104, 106, 108).

6. The hydraulic steering apparatus according to any one of Claims 1 to 5,
**characterized in that**
the flow control valve arrangement (50) is also operable as an independent device, as a pure "steer-by-wire system".

7. The hydraulic steering apparatus according to any one of Claims 1 to 6,
**characterized in that**
the release-shutoff valve (56) is designed to shut off the flow control valve arrangement (50) in case of error.

8. The hydraulic steering apparatus according to any one of Claims 1 to 7,
**characterized in that**
the control device (74) is connected to measuring sensors (88, 90) that are designed to determine an actual position of the steering cylinder (48) in order to check the plausibility of the control signals for the valves (102, 104, 106, 108).

## Revendications

1. Dispositif de direction hydraulique, qui relie hydrauliquement un vérin de direction (48) à une unité d'alimentation (28), l'unité d'alimentation (28) pouvant être reliée hydrauliquement et fonctionnellement au vérin de direction (48) par l'intermédiaire d'une vanne de direction (12) pour réaliser une liaison d'écoulement principale et l'unité d'alimentation (28) pouvant être reliée hydrauliquement et fonctionnellement au vérin de direction (48) par l'intermédiaire d'un ensemble de vannes de régulation de débit (50) pour réaliser une liaison d'écoulement secondaire contournant la liaison d'écoulement principale, l'ensemble de vannes de régulation de débit (50) étant contrôlable par un appareil de contrôle électrique (74) et l'ensemble de vannes de régulation de débit (50) comprenant des groupes de vannes pouvant être contrôlées individuellement (52, 54), qui sont respectivement montées dans la conduite d'arrivée et la conduite de retour de la liaison d'écoulement secondaire, **caractérisé en ce que**
l'ensemble de vannes de régulation de débit (50) comprend au moins une vanne (102, 104, 106, 108) qui est configurée pour générer un débit volumique défini ou définissable indépendamment d'une différence de pression présente sur la vanne (102, 104, 106, 108).

2. Dispositif de direction hydraulique selon la revendication 1, **caractérisé en ce que** ladite au moins une vanne (102, 104, 106, 108) est en outre configurée pour générer un débit volumique défini ou définissable indépendamment d'une température de la vanne (102, 104, 106, 108) et/ou d'une température d'un fluide traversant la vanne (102, 104, 106, 108).

3. Dispositif de direction hydraulique selon la revendication 1 ou 2, **caractérisé en ce que** ladite au moins une vanne (102, 104, 106, 108) est une vanne de régulation de débit bidirectionnelle.

4. Dispositif de direction hydraulique selon l'une quelconque des revendications 1 à 3, **caractérisé en ce que** l'ensemble de vannes de régulation de débit (50) comprend quatre vannes (102, 104, 106, 108), parmi lesquelles une vanne (106) est montée dans une direction arrivée-droite, une vanne (108) est montée dans une direction retour-gauche, une vanne (102) est montée dans une direction arrivée-gauche et une vanne (104) est montée dans une direction retour-droite.

5. Dispositif de direction hydraulique selon l'une quelconque des revendications 1 à 4, **caractérisé en ce qu'**une vanne de libération/d'arrêt commune (56) est montée avant les vannes (102, 104, 106, 108).

6. Dispositif de direction hydraulique selon l'une quelconque des revendications 1 à 5, **caractérisé en ce que** l'ensemble de vannes de régulation de débit (50) est également exploitable sous la forme d'un appareil solo, sous la forme d'une direction « Steer-By-Wire » pure.

7. Dispositif de direction hydraulique selon l'une quelconque des revendications 1 à 6, **caractérisé en ce que** la vanne de libération/d'arrêt (56) est configurée pour arrêter l'ensemble de vannes de régulation de débit (50) en cas d'erreur.

8. Dispositif de direction hydraulique selon l'une quelconque des revendications 1 à 7, **caractérisé en ce que** l'appareil de commande (74) est relié avec des enregistreurs de valeur de mesure (88, 90) pour l'évaluation de plausibilité des signaux de contrôle pour les vannes (102, 104, 106, 108), qui sont configurés pour détecter une position réelle du vérin de direction (48).
